# EUROPEAN PATENT APPLICATION

(11) **EP 1 172 736 A1**
(43) Date of publication of application: **16.01.2002**
(21) Application number: 00202445.3
(22) Date of filing: 11.07.2000
(51) Int. Cl.: G06F 17/30

(54) **Database conversion or integration**

(71) Applicant: Columbus IT Partner Consulting A/S, 8240 Risskov (DK)
(72) Inventor: Bonde Ejby, Thomas, 8240 Risskov (DK)
(74) Representative: Elmeros, Claus

(57) **Abstract**

The invention relates to a method of demonstrating and/or executing conversion of data contained in a first database operated by a first database program into a second database operated by a second database program according to claim 1, whereby
a selected subset of data is retrieved from the first database and transmitted to a conversion system,
at least one subset of data is converted by the conversion system into at least one converted selected subset of data,
the at least one converted selected subset of data is inserted into the second database system, said second database being accessible to a user by means of said second database program, and whereby
said second database program is remote and dedicated to the user.
By applying a method according to the invention, the new database system will be demonstrated to the customer by means of data well-known to the customer, e.g. names of his suppliers, goods sold or fabricated by the customer etc., as the data has been retrieved from the customer's own database.

## Description

### Field of the invention

The invention relates to a method of demonstrating and/or executing conversion of data contained in a first database operated by a first database program into a second database operated by a second database program according to claim 1.

Moreover, the invention relates to a method of executing conversion of data contained in a first database operated by a first database program into a second database operated by a second database program according to claim 13.

### Background of the invention

The invention relates to database programs and data related to database programs. Data bases may be applied for several different purposes such as inventory management, management of test results etc. In particular, databases are utilized for corporate business management, i.e. so-called enterprise resource planning programs, ERP. In particular, the invention deals with conversion of data from one system to another.

Several different standards defining the way records of database systems are represented have been developed over the years.

Converting data from one version of a data base program to another is well-known within the art. Usually, a new release of a database program is more or less comparable. At least in the sense that the data operated by the database program will follow the same syntax.

Nevertheless, from time to time ERP suppliers decide to change the basic structure of the database programs including the fundamental syntax. Consequently, a company applying the old database is left with the choice of either maintaining the old ERP system operating on the already established company data or switching from the old ERP system to the new system.

Apparently, each choice has its drawbacks and the only thing which is for certain is that the company will have to allocate further resources to ERP maintenance somewhere down the road.

Evidently, maintaining the old ERP system offers the possibility of maintaining old data. However, the old ERP system will inevitably lack support and necessary program features over a relatively short (unknown) period of time.

Turning now to the to possibility of replacing the old ERP system by a new ERP system, huge amounts of resources must be applied with the purpose of converting old data into a new database fitting the ERP system.

Many ways of converting data from one format to another have been disclosed within prior-art.

Basically, prior-art converting methods fall within one of the below-mentioned categories.

The first category of data conversion relates to a somewhat tough conversion implying the establishment of a converting tool, a driver, comprising an input and an output interface. The driver is preprogrammed in such a way that data of a certain kind may be converted directly into a new database capable of being operated by the new database program. This type of conversion implies comprehensive programming when establishing the converting tool due to the fact that the application logic has to be taken into consideration when incorporating it in the tool in order to obtain a true conversion.

A second kind of data conversion, and the most common, is basically that programmers convert each record of the old database by means of more or less primitive IF-THEN programming. This type of programming is almost not supported by existing tools, and the programmer may typically rely on code programming, which may be supported by different types of data mapping programs and different types of import/export tools incorporated in the ERP system.

Evidently, the above-mentioned methods leave the customer with a choice purely based on more or less substantiated assumptions or pieces of advice provided to him by his consultants.

It is an object of the invention to provide a converting tool which may facilitate easy and quick data conversion between different database formats.

### Summary of the invention

The invention relates to a method of demonstrating and/or executing conversion of data contained in a first database operated by a first database program into a second database operated by a second database program according to claim 1, whereby
a selected subset of data is retrieved from the first database and transmitted to a conversion system,
at least one of the selected subsets of data is converted by the conversion system into at least one converted selected subset of data,
the at least one converted selected subset of data is inserted into the second database system, said second database being accessible to a user by means of said second database program, and whereby
said second database program is remote and dedicated to the user.

When a customer is considering replacing his current database system, e.g. an ERG (Enterprise Resource Planning system) by another, e.g. an updated version of the same system or another system, the problem will be how to demonstrate the advantages and functions of the new system to the customer. Ordinarily, this has been done by demonstrating a version of the new system, perhaps with limited functions due to limited resources, said system containing a set of versatile and hypothetical data, i.e. a set of data, which is immediately understandable to all sorts of customers, but of very limited use to the customer since the data are not related to the data and the field of business in which the customer normally operates. Therefore, such a demonstration of a new system will not provide the customer with an optimal impression of the new system, its functionality and its advantages, as the data is not related to the customer's ordinary working field.

By applying a method according to the invention, the new database system will be demonstrated to the customer by using data well-known to the customer, e.g. names of suppliers, goods sold or fabricated by the customer etc., as the data has been retrieved from the customers own database.

According to the invention, data retrieved from the customer's database are converted so that they may be inserted into a second database, which is operated by the new database program. According to the invention, the second database is remote, e.g. the customer does not have to install new programs etc. in his own computer system. Finally, the second database is dedicated to the user or customer, providing the customer with an optimal impression of the demonstration of the new database system.

According to the invention, a remote and dedicated data base program means that the second database program is executed on a remote server, and that each user may operate his own second database program independent of the other users.

Moreover, is should be noted that due to the so-called dedication means, the data from the first database programs are inaccessible to other users than the dedicated user.

It should be noted, that the first database programs may be of different types, e.g. Damgaard XAL, Microsoft Access, etc.

When, as stated in claim 2, said second database program is hosted by means of a remote server, preferably via an Internet server, a further advantageous embodiment of the invention has been obtained.

Hereby, the second database is made easily accessible to the user as the user only has to log onto the remote server, preferably via the commonly available Internet, in order to be able to gain access to the second database containing the user-relevant data.

According to the invention, hosting means that the different users may operate their own dedicated second database program at their individual first database (or subsets of the first database) at the same time.

When, as stated in claim 3, the user may gain access to said second database program by means of a key, e.g. a code, a key- or a password provided to the user by an operator of the conversion system, a farther advantageous embodiment of the invention has been obtained.

In order to secure the confidentiality of the customer data, a code, password etc. will be provided by the provider of the service, e.g. the operator of the conversion system or the provider of the second database program according to the embodiment of the invention.

When, as stated in claim 4, retrieval of part of the data from the first database is executed by the user of said first database and on the basis of a set of terms provided by the operator of the conversion system, a further advantageous embodiment of the invention has been obtained.

If data were to be retrieved automatically, e.g. by a program from the customer's database, there would be a great risk of extracting trivial data which would not provide the customer with a good impression of the new system. By an embodiment according to claim 4, it is assured that the selected data will be of importance to the customer, while also allowing the user to preclude especially important and/or confidential data from being delivered or transmitted to the operator of the conversion system and/or the second database program system. By having defined a set of terms for the selected customer data, it is assured that data essential for a good result or even necessary to achieve a resulting demonstration database will be retrieved.

When, as stated in claim 5, the retrieval of the selected subset of data from the first database is aided by a retrieval program, preferably an interactive retrieval program provided to the user, said retrieval program storing the selected data in a storage medium, a further advantageous embodiment of the invention has been obtained.

Hereby, the retrieval of the system will be performed efficiently and effortless by the user, as the user will be guided through the selecting and retrieving processes, during which the user will be receive instructions about when to select user specified data and the type of data. The retrieved data will be stored by the program and will be ready for transmittal or delivery to the conversion system.

When, as stated in claim 6, the selected and stored data is transmitted to the conversion system by electronic communication, preferably via Internet, a further advantageous embodiment of the invention has been obtained.

Hereby, the retrieved data may be quickly and effortlessly transmitted to the conversion system which reduces the risk of prospective customers losing interest in requesting a demonstration of the new database program because of the considerable efforts otherwise involved.

When, as stated in claim 7, the conversion of the selected subset of data is performed by using two or more partial conversions, and when data converted by the first ("all but the last") of these partial conversions are stored in an intermediate storage medium, a further advantageous embodiment of the invention has been obtained.

Hereby, conversion of the data may be performed by using only a minimum of resources on the part of the provider of the conversion system and/or the second database system. As the conversion is performed in two or more steps, each including storing, the total conversion process may be executed without any special programming.

When, as stated in claim 8, the conversion of the selected subset of data is performed by using a remote conversion system, a further advantageous embodiment of the invention has been obtained.

Hereby, the conversion of the selected data may be executed by a central server, minimizing the resources involved with performing the demonstrations. As the amount of data to be transmitted to the remote conversion system may be large, it would be preferable to carry out some sort of compression, for example by using ZIP, before the transmission takes place.

When, as stated in claim 9, the conversion of the selected subset of data is performed under supervision of a validation system and when an error-reporting system is arranged to issue error reports in case of invalidity/invalidities, a further advantageous embodiment of the invention has been obtained.

Although the selection of data from the first database may be arranged to minimize the risk of failures in the conversion process, validation may be preferably be performed in connection with the conversion process in order to ensure that the result of the demonstration of the new database program will be rewarding to the customer. An error-reporting system may be arranged to issue reports of failures, making it possible to correct and/or select other data in order to optimize the resulting demonstration.

When, as stated in claim 10, the error-reporting system is arranged to transmit error reports, if any, to an operator of the conversion system and/or to the provider of the second database program, a further advantageous embodiment of the invention has been obtained.

Hereby, errors will be reported centrally and specialized personnel may take action upon receipt of such error reports.

When, as stated in claim 11, the error-reporting system is arranged to transmit error reports, if any, to the respective user having provided the relevant data, a further advantageous embodiment of the invention has been obtained.

Hereby, the user receives an early report of the failure and may be able to correct the error and/or provide a new selection of data.

When, as stated in claim 12, the error-reporting system is arranged to transmit error reports via electronic mailing system(s), a further advantageous embodiment of the invention has been obtained.

Moreover, the invention relates to a method of executing conversion of data contained in a first database operated by a first database program into a second database operated by a second database program according to claim 13, whereby
a selected subset of data constituting at least an independent part of the first database, is retrieved from the first database and transmitted to a conversion system,
at least one of the subsets of data is converted by the conversion system into at least one converted selected subset of data,
the at least one converted selected subset of data is inserted into the second database system, said second database being accessible to a user by means of said second database program, and whereby
said second database program is remote and dedicated to the user.

Hereby, the result of the conversion and insertion of data in the second database operated by the second database program will provide a complete resulting database, which may replace the corresponding part(s) of the old/first database system. This will allow the customer to operate the database system via the remote server, e.g. via the Internet. An "independent part" is understood as a part containing all necessary data to run, e.g. store, provide and update the data, the database and database program on an everyday scale. Preferably, this may be a full and complete database.

The invention relates to a database conversion or integration editor (DCE) in combination with the above-mentioned remote conversion technique comprising
data input means for inputting of database representing fields (DRF) having an input syntax (IS),
said conversion editor comprising
   means for converting said database representing fields (DRF) into an intermediate database (TDB) of converted database representing fields (CDRF), said converted database representing fields (CDRF) having an output syntax (OS).

According to the invention, syntax is understood as the various kinds of signs occurring in a data processing system and possible arrangements of such signs, complete abstractions being formed on the basis of the signs.

Hence, syntax is understood as a way of storing information. An example of such data representation is integer, character or e.g. a certain predefined syntax of the data field of a record, i.e. a convention defining a field comprising a predefined maximum of characters and a further requirement determining that unused character fields must contain e.g. a blank-character.

According to the invention, simple conversion may applied initially, while a more complicated establishment of relations may be postponed to a later stage of the conversion process.

Typically, the initial conversion need not to be checked by the database program application logic.

Hence, according to the invention, the user may run his old database by means of hosting on a remote server of a new (the second) database program. The user may thus avoid exchanging his old (the first ) database program in order to gain access to "old" data.

### The drawings

The invention will be described below with reference to the drawings of which
- fig. 1A: illustrates the basic principle of web-conversion according to one embodiment of the invention.
- fig. 1B-18: illustrates an advantageous conversion method which may be applied to the above-mentioned web-conversion system.

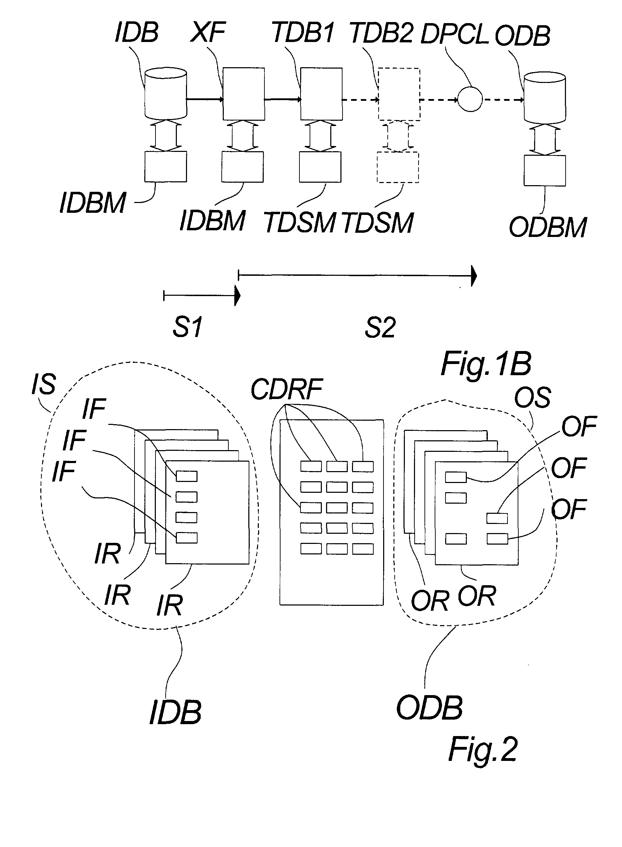

- fig. 1B: shows some basic principles a conversion or migration according to the invention,
- fig.2: illustrates the nature of transmitting and receiving data sources according to the invention,

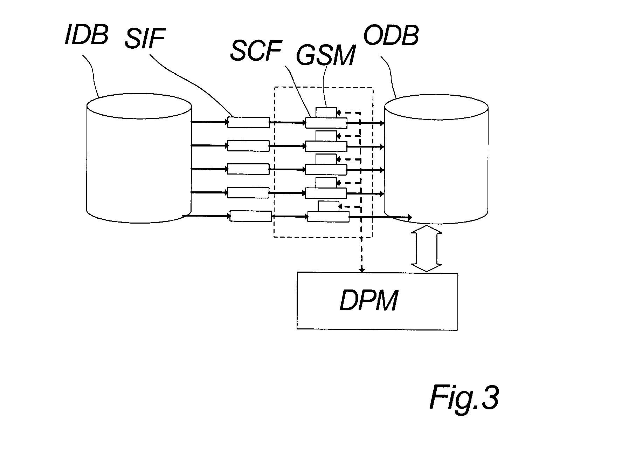

- fig. 3: illustrates conversion of a selected group of data according to the invention,

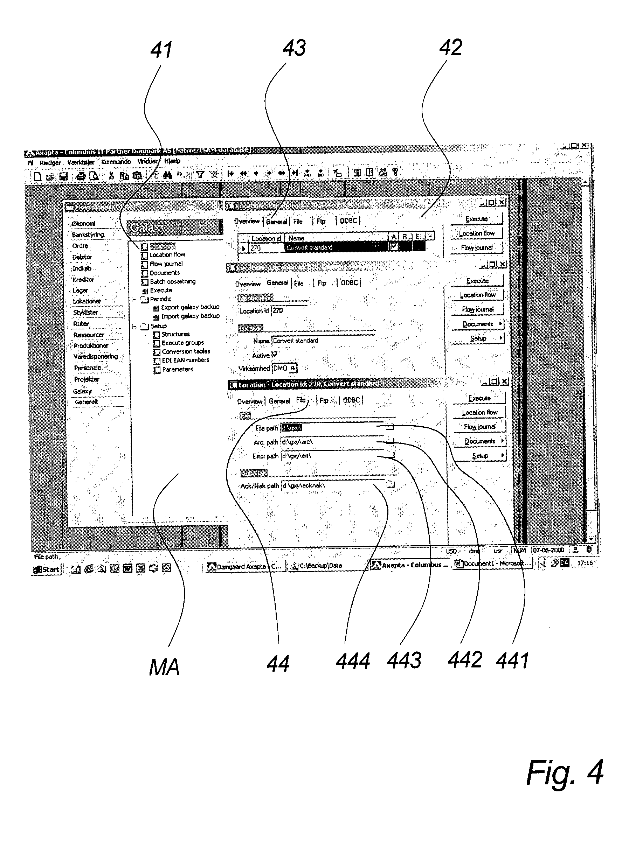

- fig. 4: illustrates the opening session of a conversion tool according to the invention,

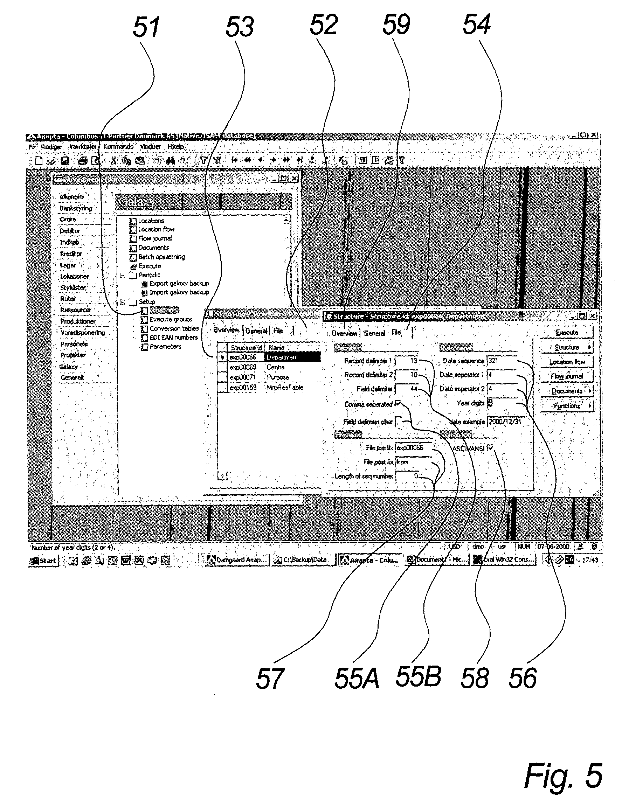

- fig. 5: illustrates the selection of the setup structure node selecting a group of files,

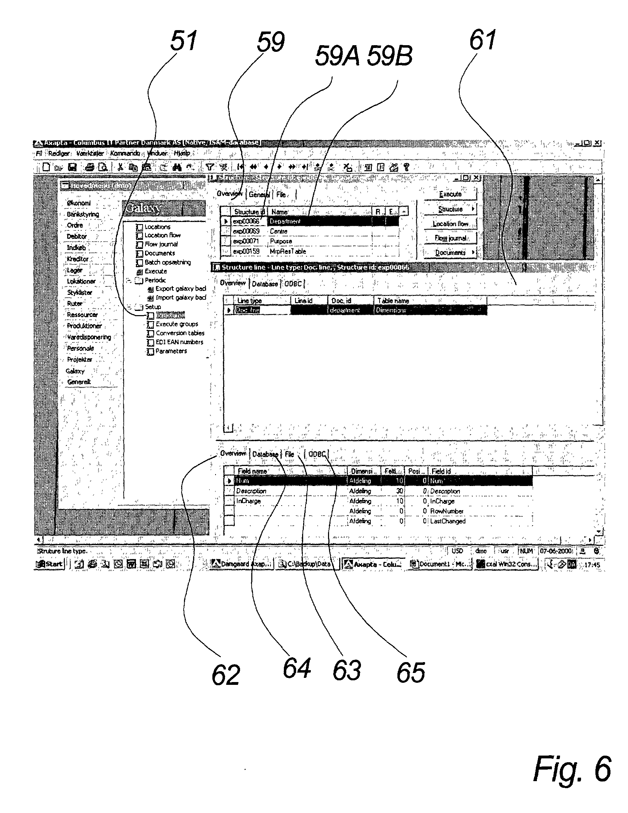

- fig. 6: illustrates the definition of the output structure of the converted data.

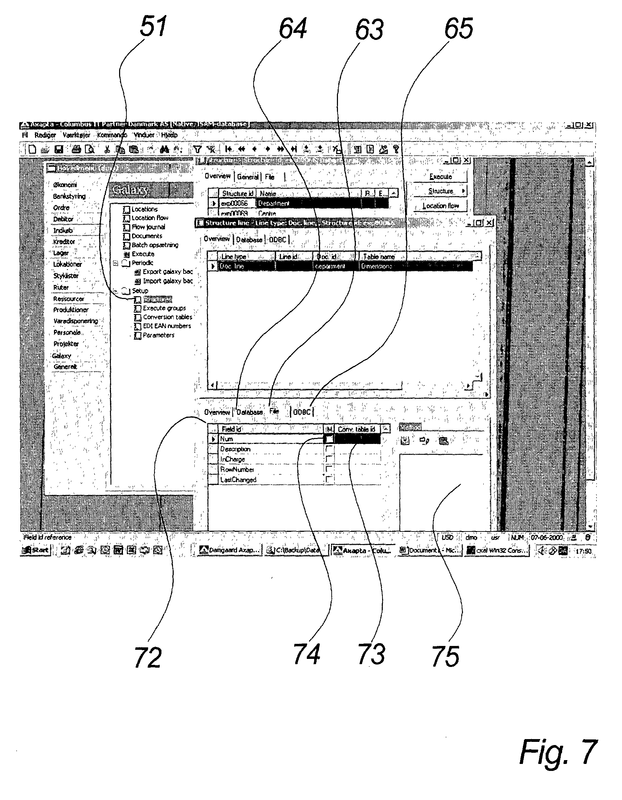

- fig. 7: illustrates the possibility of applying conversion editor-defined functions to and/or from the document library forming the intermediate database.

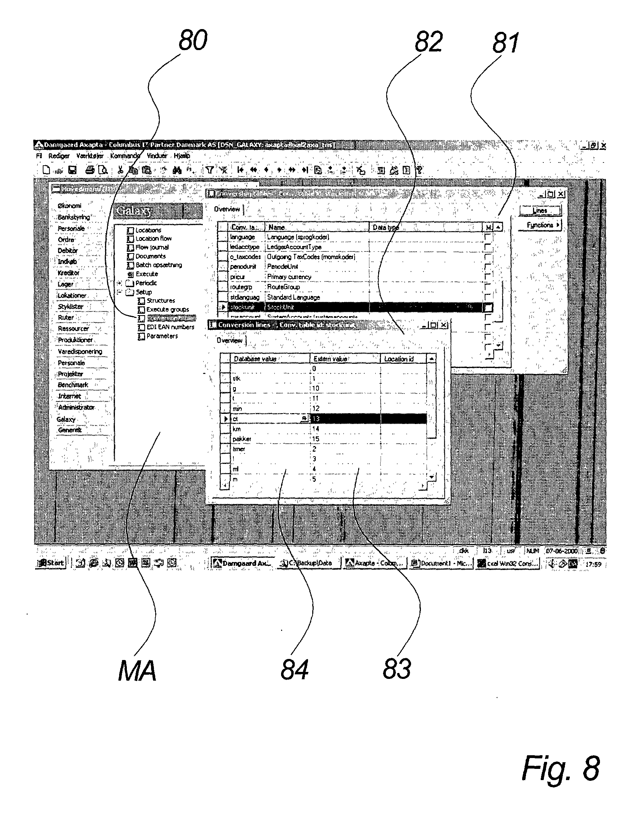

- fig. 8: shows a graphical mapping table incorporated in the conversion tool

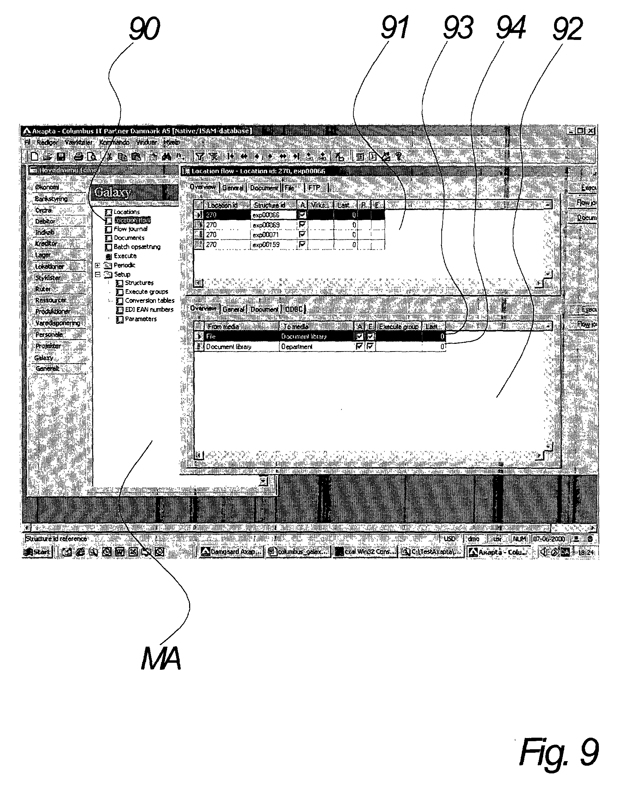

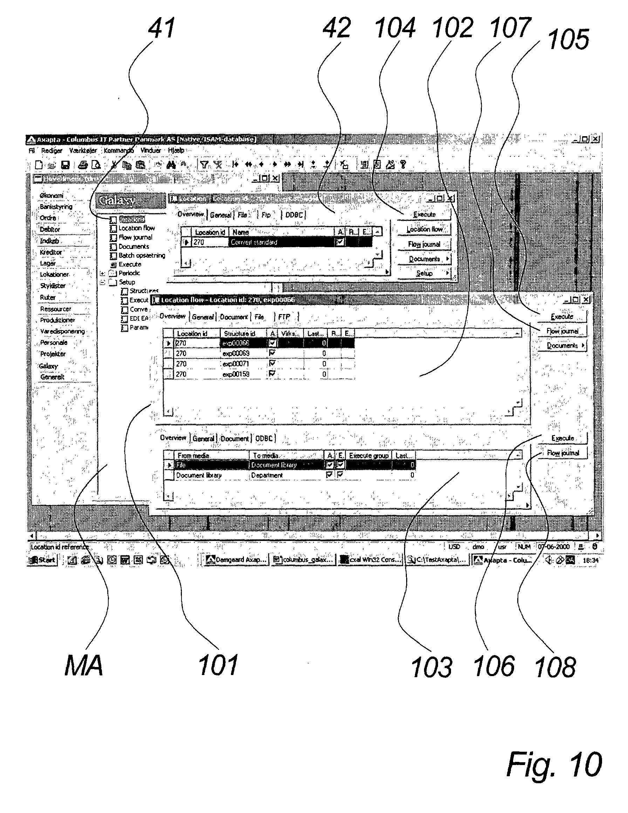

- fig. 9 and 10: illustrate the structural setup of the data fields contained in the document library,

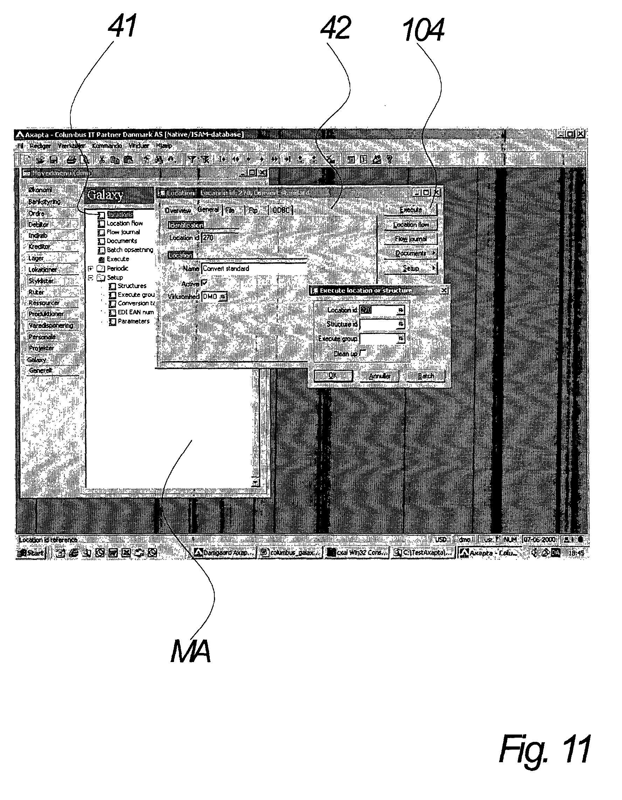

- fig. 11: illustrates the initiation of a top-level conversion into the output database

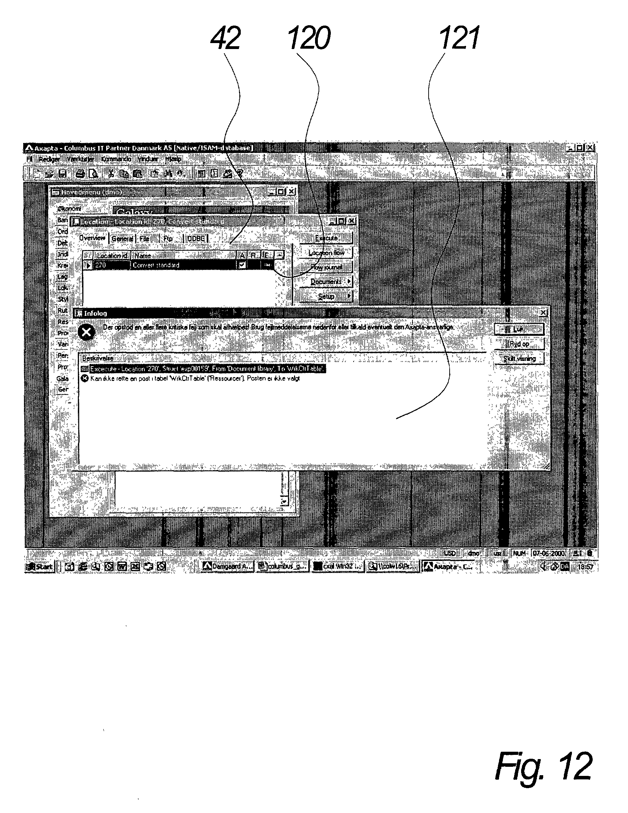

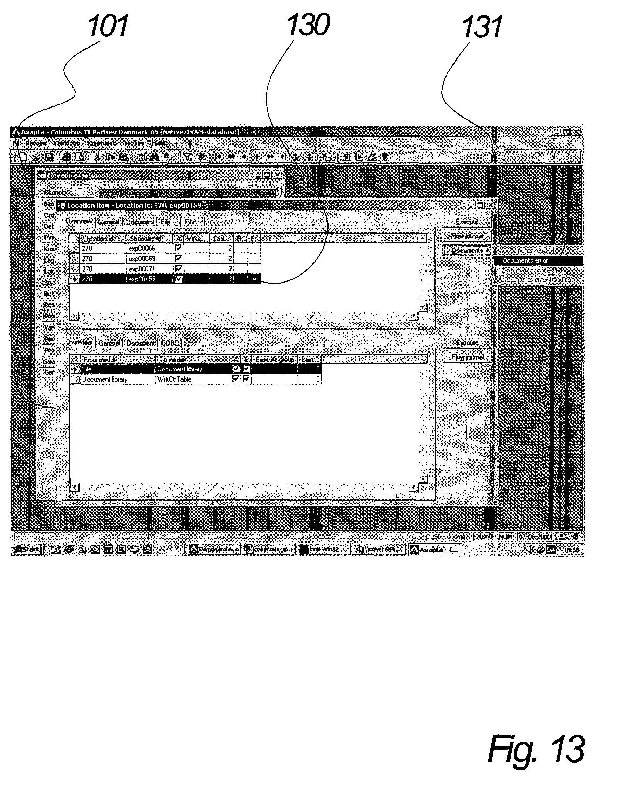

- fig. 12 - 13: illustrate an error-reporting tool of the embodiment according to the invention,

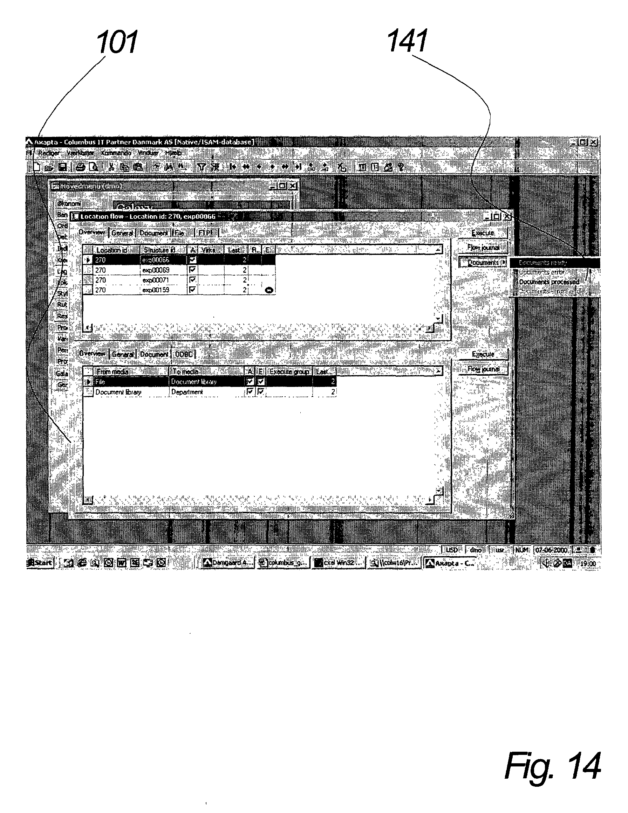

- fig. 14 - 17: illustrate field structure mapping and debugging means according to the invention,

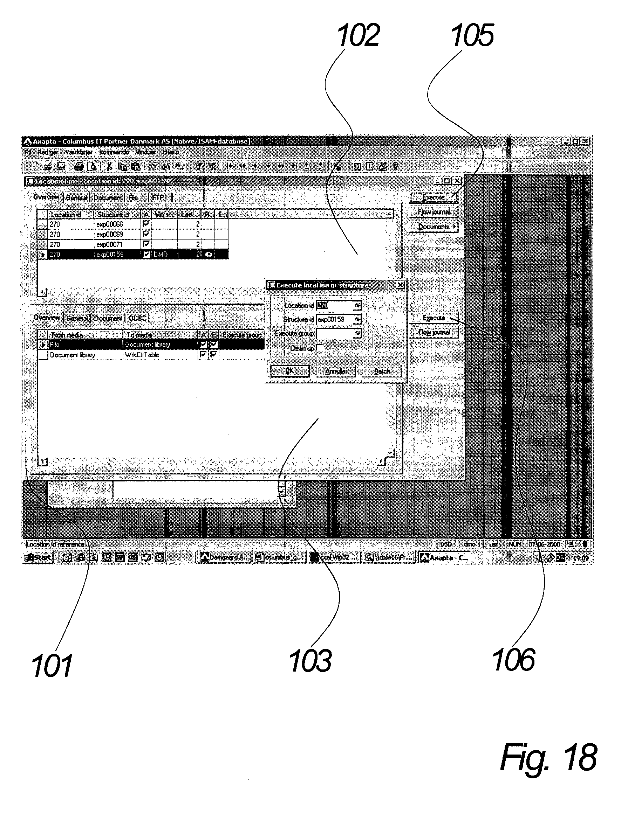

- fig. 18: shows a final successful conversion.

### Detailed description

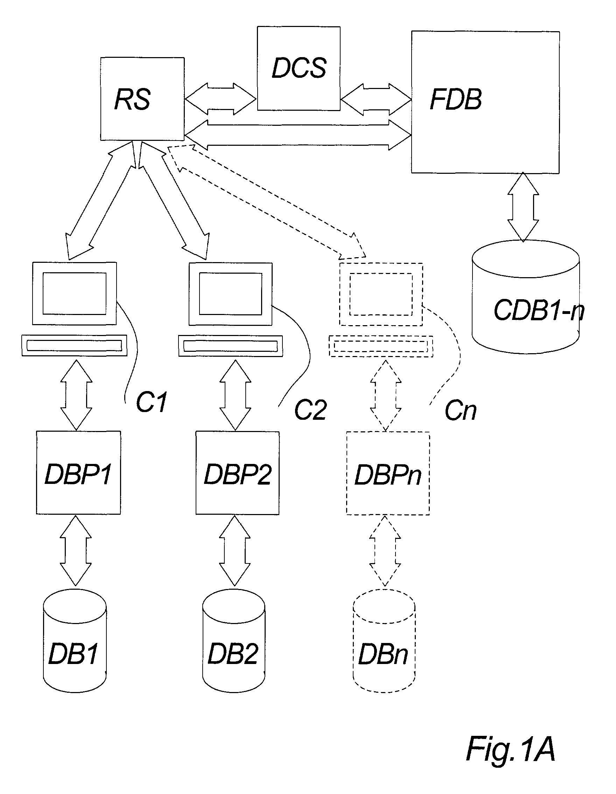

Fig. 1A illustrates the basic principles of remote conversion according to one embodiment of the invention.

The system comprises a number of local client computer systems C1, C2, Cn.

Each computer system controls an associated database DB1, DB2, DBn by means of database programs DBP1, DBP2, DBPn.

Evidently, the database programs may be identical or they may be different programs or program versions.

According to the illustrated embodiment, the database programs may e.g. be Concorde XAL supplied by Damgaard A/S.

If users of the computer systems C1, C2, Cn want to experience their own data, or at least some of the data contained in their databases DDB1, DB2, DBn respectively, the individual user may execute a script by means of the database program of the system or e.g. an ODBC driver and export a number of tables from the database.

Subsequently, the exported data may be transferred to a remote computer, e.g. a web-server. The data should preferably be encrypted and zipped in order to facilitate secure and fast transfer of data to the remote server RS. Evidently, transfer of the data should include unambiguous identification of the origin of the data.

The remote server RS may then unzip the data, return an unique ID code or password to the sender, i.e. the user of e.g. the computer system DBP1.

Subsequently, the remote server transfers the data to a database conversion system DCS. An advantageous database conversion system DCS optimized for cooperating with the described Internet-based system will be described below.

Subsequently, the database conversion system DCS outputs the data from the database DB1 into the database CDB1-n operated by a hosted demo-database program FDB.

Subsequently, a user may be notified that the data of his system has been converted by the remote server by means of e.g. an e-mail.

Then, the exemplified user of the computer system C1 may access his personally converted demo-database CDB1 by means of the hosted demo-database program FDB. The hosting may be applied via an Internet browser by the local computer and the facilitation of a hosted demo-database program may e.g. be obtained by means of a CITRIX application executed on the remote server.

Likewise, a user of the other computer systems C2, Cn may transfer his personal database or preferably a selected part of it and subsequently test the demo-database program on his own data due to the fact that the data have been converted.

The selection of data at the user/customer location may e.g. be made on the basis of a export script forwarded to the user/customer by e-mail or by e.g. a CD.

The description below focuses on a specific database conversion system DCS which may advantageously be applied in relation to remote conversion and hosting according to the above-mentioned features of the invention.

Thus, the simplicity and the extremely user-friendly interface of the below-mentioned system facilitates remote conversion which may actually be applicable by means of other conversion systems, if any.

The illustrated embodiment of the invention is programmed on the basis of an ERP system called Concorde AXAPTA supplied by Damgaard A/S. The illustrated embodiment is adapted to conversion of data exported from a ERP system such as Concorde XAL to data which may be operated by Concorde AXAPTA.

Concorde XAL is also supplied by Damgaard A/S.

Evidently, the conversion tool may be adapted to conversion to and from almost every known database format.

Likewise, the illustrated embodiment may be designed for several integration models, such as
Fixed length format Ascii files
Character separated Ascii files
ODBC exchanging
IBM MQ series
Microsoft MQ series
DLL integration for TeleCon
EDI format EDIMatic
Oracle SQL integration
Axapta Conversion
XML
Bizztalk
Ftp

The illustrated module has been coded in Concorde Axapta UK and, consequently, the module must be translated if the application has been made in another language.

The illustrated module offers general readings of data into Concorde Axapta, but evidently, client specific applications or adaptations must be programmed in Axapta, i.e. the receiving program, in order to obtain full benefit of the invention.

Fig. 1C illustrates some principle aspects of an embodiment according to the invention.

The illustrated process illustrates the workflow of a conversion tool according to one embodiment of the invention.

The workflow comprises two principle process steps, S1, S2.

The first process step, S1, relates to export of an input database or a part of an input database IDB stored in input database storing means IDBM. The database is exported into a more or less flat-file export format, XF, stored in corresponding export database storing means XDBM.

The first process step, S1, will typically be performed on the platform of the exporting database by means of suitable drivers incorporated in the database program.

Possible export formats or methods may e.g. be
- Fixed length format Ascii files
- Character separated Ascii files
- ODBC exchanging
- IBM MQ series
- Microsoft MQ series
- DLL integration for TeleCon
- EDI format EDIMatic
- Oracle SQL integration
- Axapta Conversion
- XML
- Bizztalk
- Ftp: File transfer protocol

According to the below-mentioned preferred embodiment, the above-mentioned export will be described as a separate process step to be performed by the exporting database. Nevertheless, it should be noted that the "export drivers" establishing the export format might be incorporated in the conversion tool according to the invention.

The second process step, S2, involves main routines of one embodiment of the invention.

The second step comprises the step of reading the exported format, e.g. comma separated files, from the export database storing means XDBM.

The export format XF comprises a plurality of data fields organized in a certain manner, e.g. in files comprising a lot of table listings of associated data.

If, on the other hand, exchange by means of ODBC is preferred, the ODBC retrieved data from the input database IDB would typically be fed directly to the below-mentioned first intermediate database without any storing in an export format XF.

In a first process sub-step, the associated data are now mapped into a first intermediate database TDB1 and stored in intermediate database storing means TDSM.

In a second optional process sub-step, the associated data is mapped into a second intermediate database TDB2 and stored similarly in intermediate database storing means TDSM. As stated, this second process is optional and will in many cases be omitted. On the other hand, it may be preferable to provide the system with a third or even more intermediate databases.

The associated data from the first intermediate database TDB1, if this is the only intermediate database, are subsequently mapped into an output database ODB stored in output database means ODBM.

If one or more intermediate databases TDB2 - TDBn are involved in the system, the output data from the last of these will be the data to be mapped into the output database ODB.

When the associated data are mapped to the output database ODB, the associated data are provided with relations associated with and provided by the output database ODB, said relations being an inherent part of the output database ODB. Thus, the contents of the data will gain their real value when stored in the output database ODB. The associated data are mapped into the database ODB via data base program control logic DPCL.

The mapping will then typically imply insertion into the output database ODB by means of a program language associated with the applied database program.

According to the invention, such database programming language should be object-oriented in order to apply the application logic and the kernel logic to the writing to the output database in a relatively simple way.

According to a below-mentioned embodiment of the invention, such programming may e.g. be a JAVA-like language such as a language associated with Concorde AXAPTA.

By the mapping of data from the export format, XF, to the first intermediate database or from a intermediate database to a further intermediate database, a number of trivial conversions of data may be performed, while a final conversion complying with the structure and relations of the output database ODB is preferably carried out as the last of these partial conversions.

Optionally, part of the more complex conversion processes may be performed as part of the mapping to the intermediate database or databases.

Fig. 2 illustrates the above-mentioned process flow in detail.

The input database IDB comprises a plurality of input records IR. The input records comprise input fields IF, and the input fields are established on the basis of the input syntax (IS) defined by the database program operating the input database.

The input fields IR are now, subsequent to the above-mentioned step 1, mapped into the intermediate database (TDB) as a plurality of converted input fields representing elements CDRF and the IS syntax of the fields are now converted into an output syntax OS. Still, the input field representing elements CDRF are loosely associated in the sense that the only relations between the fields are the implicit relations indicated by the mutual location of the fields in the intermediate database TDB.

Subsequently, the input field representing elements CDRF, now having the output syntax OS, may be inserted into the output database ODB, thereby establishing a relational database of output records OR comprising output fields OF having an output syntax.

Again, it should be stressed that the terms input and output should only be understood as a relationship between the database elements. Thus, an output field does not determine a field which may only be applied to the physical action of outputting data, but rather the output field belonging to the output database.

Turning now to fig. 3 a further important aspect of the invention will be briefly introduced.

According to the illustrated embodiment, data are exported from an input database IDB to groups of data fields SIF. Each group may e.g. be contained in a comma-separated file.

The established groups of fields SIF may now be converted into the intermediate database individually. The illustrated groups of fields SIF are converted into groups of converted fields SCF. According to the above-mentioned embodiment of the invention, this conversion will imply the conversion of the syntax of the fields contained in the groups into the output syntax OS matching the syntax or substantially matching the syntax of the output database program operating the output database ODB.

The interesting feature is now that conversion into the output database may be performed individually, one group at a time, or evidently, by several chosen groups at a time.

This conversion into the output database is initially operated by means of a graphical status manager GSM interacting with a data processing manager DPM.

Each manager GSM, DPM may be partly operated by the user of the integration or conversion software application.

The primary function of the graphical status manager GSM is that of establishing the conversion status of the associated group, either manually or automatically.

Manual establishment of the conversion status of a group of fields, e.g. a file, may e.g. be a user-established setting of a conversion status indication that the data file is ready for conversion, or e.g. that a subsequent conversion should by-pass the specific file.

Automatic establishment of the conversion status may e.g. be established on the basis of error signals or reports fed back to the database program control logic subsequent to a failed conversion attempt. Such a flag would reveal or at least indicate the origin and error type to the programmer operating the editor.

Another possible automatic establishment of the conversion status may e.g. be established on the basis of a feed-back to the database program control logic determining that conversion of the specific selected group of fields has been successful. A "processed" flag of an associated group of fields may then be presented to the user.

A further possible automatic establishment of the conversion status may e.g. be made by means of error-reporting means incorporated in the editor for control of the conversions or some of the conversion into the intermediate database. Evidently, such error-reporting generator would typically be dedicated to the monitoring of quite simple conversion errors. It should be noted that fatal errors typically occur when violating the quite complicated control logic of the database. Therefore, pre-error checks performed during conversion into the intermediate database or errors checks performed subsequent to the conversion into the intermediate database but before writing into the output database should typically deal with quite simple (obvious) errors, while detection of more complicated errors dealing with e.g. violations of the database program logic should preferably be left to the database program during writing into the database via the database program control logic.

The data processing manager DPM controls the execution of conversion of the groups of fields SCF stored in the intermediate database TDB on the basis of the conversion status established by means of the graphical status manager GSM associated with the specific group and also on the basis of user-commands activating the data processing manager DPM in order to execute conversion into the output database of some or all selected groups.

Fig. 4 illustrates the opening session of a converting tool according to the invention.

The converting tool comprises a monitoring area (MA), which may be utilized for establishment of the different conversion steps to be performed by means of the tool.

Initially, it should be noted that the illustrated programming tool is highly graphical, and as it will be noted later on, facilitates a conversion setup which may be operated by programmers having even only modest knowledge of the huge number of details associated with the conversion process.

Initially, a location node 41 has been selected by means of a computer input device, such as a mouse, with the purpose of choosing the location and type of the set of records to be converted.

The selection of the location node 41 implies a pop-up menu (42) adapted to the above-mentioned definition of the structure location.

When the thumbnail index "File" 44 has been selected, the location of the illustrated defined structure and the location of the output files are defined by filling in the fields 441, 442, 443, and the field 441 defining the location of the data source file, the Arc path-field 442 defining the location of approved files, e.g. documents having been processed or converted without errors, and Error path field 443 defining the location of error files, e.g. documents having been processed or converted with error(s). According to the illustrated embodiment, the file path is d:\gxy, the Arc path is d:\gxy\arc\ and the Error path is d:\gxy\err.

The field 444 defines the Ack/Nak path, i.e. the location of acknowledgements (Ack) corresponding to documents received without transmission errors, e.g. with acceptable data, and for negative acknowledgements (Nak) corresponding to documents received with incorrect data.

According to the invention, almost any variety of input formats may be applied other than the illustrated file structure. Other possible input formats may e.g. be Ftp, File transfer protocol, ODBC, XML and many others.

The illustrated embodiment of the invention supports Ftp and ODBC input records.

Turning now to fig. 5, a setup structure node 51 has been selected.

The selection of the setup structure node 51 implies opening of a pop-up menu 52 comprising an overview 53 of the files contained in the above-mentioned file library in the data source structure field 441. Furthermore, the overview 53 offers the possibility of selecting the current file to be converted.

Choosing now the thumbnail index "File", 54, basically four different groups of definition fields appear.

The fill-in fields comprise delimiter fields 55A, 55B, date format fields 56, file name fields 57 and finally a conversion field 58.

The delimiter fields 55A, 55B comprise checkboxes 55A for indicating the type of fields, i.e. comma-separated or field-delimited files, the latter providing the possibility of indicating the character for delimiting the fields. The fields 55B will have to be filled in with the ASCII-codes for the delimiters (1 and 2) the records and the ASCII-code for the field delimiter, respectively.

The date format fields 56 must be filled in with information concerning the format used to indicate dates in the source files, e.g. the sequence of day, month and year, the date separators and the number of digits used to indicate the year.

The file name fields 57 contain the name of the respective file comprising the pre-fix, post-fix and length of the sequence number as illustrated.

The conversion field 58 comprises a checkbox for indicating an ASCII/ANSI-conversion of the respective source file.

Turning now to fig. 6, the thumbnail index "Overview" 59 of fig. 5 has been selected.

A pop-up menu 61 will now appear with the purpose of defining the output structure of the converted data.

Here, the "Overview" thumbnail index 62 is chosen, giving the basic output structure, i.e. in the current embodiment: the Axapta input structure will comprise three field names, Num, Description and Incharge. The lengths of the field are 10, 30 and 10 characters respectively and the positions determined to be 0. Moreover, each field name may be provided with a nickname by the programmer; Num, Description, InCharge, Rownumber and LastChanged.

Finally, the two last lines may comprise the RowNumber and a LastChanged date.

When choosing the file thumbnail index 63 instead, a new menu will appear as illustrated in fig. 7.

Fig. 7 illustrates a very strong feature of the invention.

The conversion tool incorporates the possibility of applying very simple initial conversion of the input data. The primary object of the initial conversion is that of converting the input data into a format which may be read by the receiving program. Such conversion may typically be a conversion of integer or other short form character-based IDs into the basic syntax of the receiving program, typically a multicharacter field. More advanced conversion of the relations between the data records should be carried out in a subsequent conversion.

According to the present embodiment of the invention, such changes of e.g. integer code into a more descriptive code may be converted extremely easy due to the fact that the editor comprises tables which may simply be referred to in a "Conversion table ID" field 73, each related to an input field ID 72 when choosing the "File" thumbnail index 63 of the structure line descriptive pop-up menu.

Moreover, the initial conversion offers the possibility of marking the mapping of the specific field as mandatory in the Mandatory field 74.

If a specific field is marked as mandatory, this will have the effect that even if the field contains no value, the field will be preserved during conversion, which is of great importance if a value has to be filled into the field in the output database at a later point. The "Mandatory" marking thus preserves specific fields, even if they have no field value at the actual moment.

Furthermore, the tool comprises a mini-editor area 75. This mini-editor area offers the possibility of adding a degree of complexity to the mapping of the initial conversion. The programming of the mapping methods may be made according to the language of the database program.

It should be noted that the methods defined in the mini-editor area 75 are local in the sense that they only deal with the initial conversion of the specific field(s).

It should, moreover, be noted that all input data are ready for subsequent conversion of relationships between the tables in the sense that all trivial conversion into a new syntax of the individual field has been more or less completed during the first conversion.

When the thumbnail index 64 "Database" is chosen in the menu illustrated in fig. 7, a further mini-editor area (not shown) corresponding to the mini-editor area 75 will appear. In this mini-editor area, it is possible to define methods, e.g. programming for conversion or mapping of data from the intermediate database called the document library to the output database ("database"), e.g. a subsequent conversion. The programming of the mapping methods may be made according to the language of the database program.

A thumbnail index "ODBC" 65 may be selected, if this format is involved. This is analogous to the selection of the "File" thumbnail index 63 as described above and will not be further described in this context. Thumbnail indexes corresponding to other formats, e.g. Ftp, etc. may be provided.

The conversion tables mentioned above in relation to field 73 in fig. 7 will now be described in further detail with reference to fig. 8 which illustrates an example of a conversion table. When the "Conversion Table" 80 is activated in the Monitoring Area MA, a pop-up-menu 81 will appear, comprising the available conversion tables, which may be standard, predefined or user-defined tables.

One of these tables, the "StockUnit"-table has been chosen in fig. 8 and appears as table 82. In this table, the external values, i.e. the incoming values, are listed in a column 83, and the corresponding database values are listed in column 84. As an example the external value "13" is shown which will be converted by the initial conversion to database value "ct".

The possibility of performing the conversion in two or more partial conversions will now be described with reference to fig. 9. When the "Location Flow" 90 in the Monitoring Area MA is activated, a pop-up-menu 91 appears. In the thumbnail index "Overview", this menu 91 shows the files which are subject to this example of a conversion, i.e. the same files as illustrated on fig. 5 and 6. When selecting one of these files, e.g. the shown file with the structure ID "exp00066", it is possible to specify a flow of data, i.e. from one media to another media in a flow-menu 92.

In the example shown in menu 92, two partial flows are specified for the file with the structure ID "exp00066". The first partial flow 93 takes the data from the file (the "from media") and transmits them to the intermediate database (the "to media") called the Document Library, and the initial conversion prescribed in connection with the conversion tool shown in fig 7, e.g. the use of conversion tables, mapping using programming etc., will be performed in the process.

The second partial flow takes the data from the intermediate database (the "from media") "Document Library" and transmits them to the output database (the "to media"), in the illustrated example called "Department". During this process, the conversion methods defined in connection with the mini-editor under the thumbnail index 64 "Database" (fig. 7), e.g. programming, takes place by bringing the data to its final form and placing.

Obviously, other media than the ones mentioned above may be selected as the "from" and "to"-media, as the selection of these media has to be made in relation to the actual structures of the databases involved.

The actual conversion of the data is now ready to take place. The conversion may be done on three levels which will be illustrated in the following with reference to fig. 10.

In the Monitoring Area MA a location node 41 is selected which activates the pop-up-menu 42. In this menu, a top-level conversion is illustrated comprising the conversion illustrated in the box 101, i.e. all location flows defined in box 103 for all structure ID's defined in box 102. As described later on, this conversion may be activated by the button "Execute" 104.

A medium-level conversion comprises all location flows, i.e. all location flows in box 103, defined as a single location ID, e.g. Structure ID "exp00066" as illustrated. Such a conversion may be executed by activating the button Execute 105 in box 102. Finally, a bottom-level conversion will only comprise one partial flow for a single location ID, e.g. as illustrated the flow from "File" to "Document Library" (box 103) for the location ID with structure ID "exp00066". This conversion may be executed by activating the button "Execute" 106 in box 103.

Fig. 11 illustrates the initiation of a top-level conversion as described. In the pop-up-menu 42, the thumbnail index "General" is selected and the button "Execute" 104 is activated.

The result of an example of a top-level conversion is illustrated in fig. 12. An error has occurred, indicated by the marking of"E" 120 in the pop-up-menu 42. An error report is available in box 121.

The error may be traced by selecting the pop-up-box 101 (corresponding to the situation shown in fig. 10). In this box, it is indicated by the marking of "E" 130 that a conversion error has occurred in connection with the conversion of the location ID with structure ID "exp00159", creating a "Documents error" 131.

Similarly, it can be seen in fig. 14 that by selecting the other location IDs one by one, the conversions have been executed without errors, as indicated by "Documents processed" 141 as shown for structure ID "exp00066".

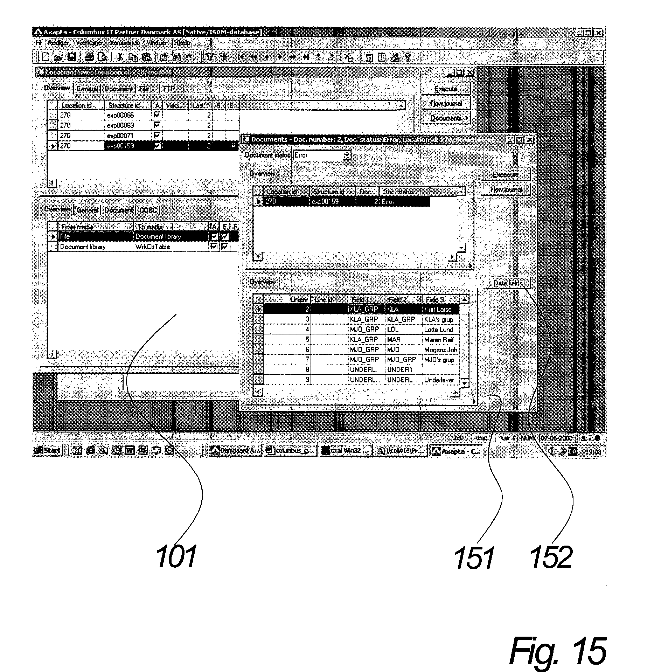

Returning to the location ID with structure ID "exp00159", the information which has been converted to the intermediate database "Document Library" may be seen in a pop-up-box 151 as shown in fig. 15. Further information on the respective data fields may be viewed one by one by selecting the appropriate fields and activating the button "Data fields" 152, which may provide the necessary information in order to be able to correct an error.

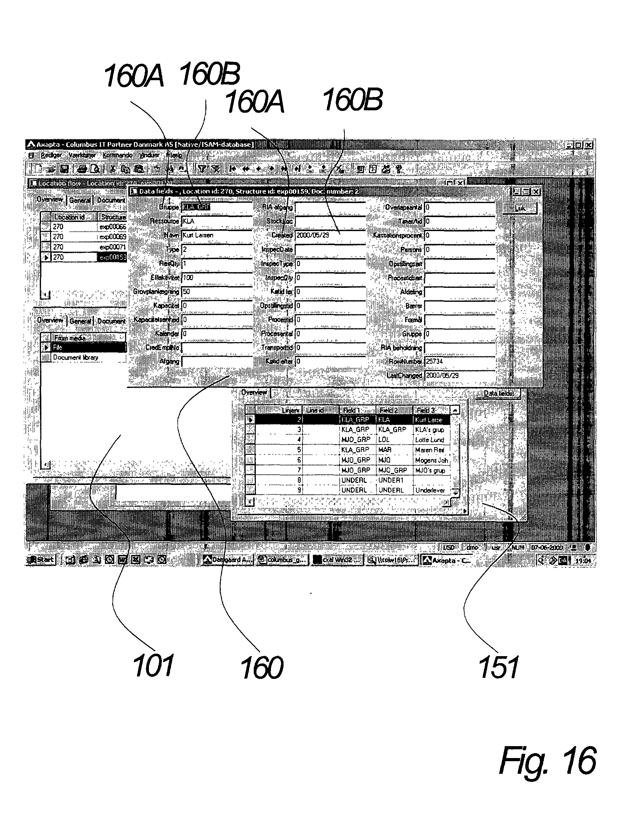

An example of the contents of the data fields in the "Document Library" can be seen in the table in box 160 in fig. 16.

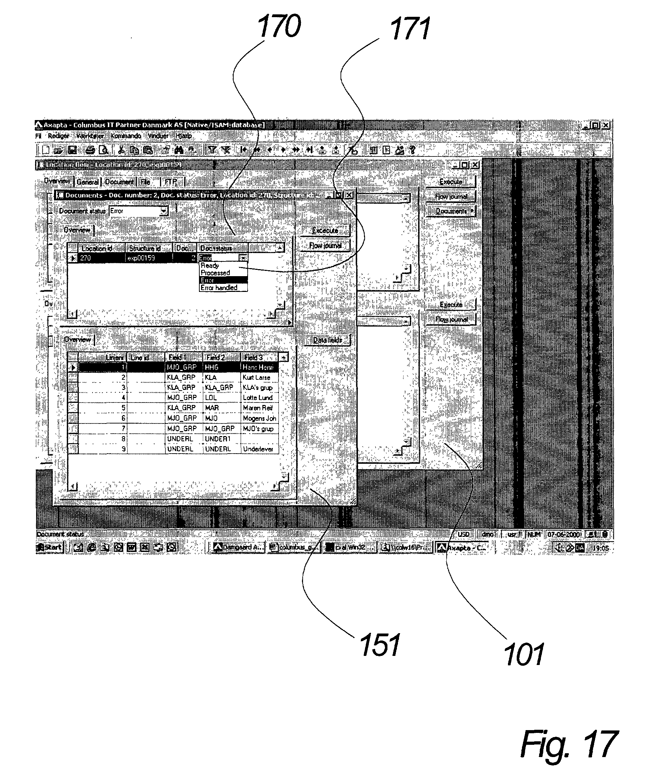

When the error has been located and corrected, it will not be necessary to repeat the partial conversions for which no errors occurred. As illustrated in fig. 17, the "Document status" 170 in box 151 for the location ID with structure ID "exp00159" may be changed to status "ready" 171, making it possible to initiate partial conversion from the intermediate database "Document Library" of this particular file.

This is illustrated in fig. 18 (corresponding to fig. 10), which shows the initiation of a conversion of the location ID with structure ID "exp00159"only, i.e. a medium level conversion as described earlier. The initiation of the conversion is activated by the button "Execute" 105. The other location IDs have already been converted and do thus not need be converted again.

If the error had occurred in the second data flow, i.e. the partial conversion from the intermediate database "Document Library" to the output database, it would only be necessary to initiate a bottom-level conversion, e.g. a partial conversion from the "Document Library" to the output database, activated by the button 106.

A further important feature of the invention will now be described with reference to fig. 10. Two buttons 107 and 108 in the pop-up-menu 101 are of importance. These buttons marked" Flow journal" will, when activated, reveal a file containing all flow processes that have been performed in the system, indicating references to files, documents etc. having been processed, information on the status of the respective processes and the relevant time of processing.

The button 108 will reveal file-covering processes executed by a single selected partial process, e.g. the conversion from "File" to "Document Library" for the selected structure ID "exp00066", while the button 107 will reveal a file covering all partial processes executed for a selected structure ID.

This feature will provide the user wit the full story on the processes that have been executed and the corresponding results, for example status of documents processed, such as "Error", "Ready", "Processed" and "Error handled".

In the above, the invention has been described in connection with conversions. However, these conversions may obviously also constitute what is known as integrations or migrations, and the invention may serve to transmit data from one database to another or vice versa continuously or on a regular basis.

As regards the error reports and indications of such reports or errors, they have been shown to emerge on the visual user interface, e.g. on the screen, in the above. However, it is important to point out that the invention facilitates communication of these reports and indications in a number of ways as characterized in the claims. As an example, the error reports may be sent by e-mail or by other means of external communication to a location or a supervisor of the system or they may be directed to one or more pre-selected users, preferably listed in order of priority.

Finally, it should be emphasized that the illustrated embodiment is only an example of the invention. Many other applications may be applied within the scope of the invention.

## Claims

1. Method of demonstrating and/or executing conversion of data contained in a first database operated by a first database program into a second database operated by a second database program, whereby
a selected subset of data is retrieved from the first database and transmitted to a conversion system,
at least one selected subset of data is converted by the conversion system into at least one converted selected subset of data,
the at least one converted selected subset of data is inserted into the second database system, said second database being accessible to a user by means of said second database program, and whereby
said second database program is remote and dedicated to the user.

2. Method of demonstrating and/or executing conversion according to claim 1, whereby said second database program is hosted by means of a remote server, preferably via an Internet server.

3. Method of demonstrating and/or executing conversion according to claim 1 or 2, whereby the user may gain access to said second database program by means of a key, e.g. a code, a key- or a password, provided to the user by a operator of the conversion system.

4. Method of demonstrating and/or executing conversion according to claims 1-3, whereby retrieval of part of the data from the first database is executed by the user of said first database on the basis of a set of terms provided by the operator of the conversion system.

5. Method of demonstrating and/or executing conversion according to claims 1-4 whereby retrieval of the selected subset of data from the first database is aided by a retrieval program, preferably an interactive retrieval program provided to the user, said retrieval program storing the selected data in a storage medium.

6. Method of demonstrating and/or executing conversion according to claims 1-5 whereby the selected and stored data will be transmitted to the conversion system by electronic communication, preferably via Internet.

7. Method of demonstrating and/or executing conversion according to claims 1-6 whereby the conversion of the selected subset of data is performed by using two or more partial conversions, and whereby the data converted by the first ("all but the last") of these partial conversions are stored in an intermediate storage medium.

8. Method of demonstrating and/or executing conversion according to claims 1-7 whereby the conversion of the selected subset of data is performed by using a remote conversion system.

9. Method of demonstrating and/or executing conversion according to claims 1-8 whereby the conversion of the selected subset of data is performed under supervision of a validation system and whereby an error-reporting system is arranged to issue error reports in case of invalidity/invalidities.

10. Method of demonstrating and/or executing conversion according to claims 1-9 whereby the error-reporting system is arranged to transmit error reports, if any, to an operator of the conversion system and/or to the provider of the second database program.

11. Method of demonstrating and/or executing conversion according to claims 1 - 10 whereby the error-reporting system is arranged to transmit error reports, if any, to the respective user having provided the relevant data.

12. Method of demonstrating and/or executing conversion according to claims 1-11 whereby the error-reporting system is arranged to transmit error reports via electronic mailing system(s).

13. Method of executing conversion of data contained in a first database operated by a first database program into a second database operated by a second database program, whereby
a selected subset of data constituting at least an independent part of the first database is retrieved from the first database and transmitted to a conversion system, and
at least one of the subsets of data is converted by the conversion system into at least one converted selected subset of data,
the at least one converted selected subset of data is inserted into the second database system, said second database being accessible to a user by means of said second database program, and whereby
said second database program is remote and dedicated to the user.
